# FASCICULE DE BREVET EUROPEEN

(11) **EP 0 542 586 B1**
(45) Date de publication et mention de la délivrance du brevet: **28.05.1997**
(21) Numéro de dépôt: 92402787.3
(22) Date de dépôt: 13.10.1992
(51) Int. Cl.: B60L 11/18

(54) **Chaîne de traction électrique intégrant la fonction moteur/générateur frein avec la fonction chargeur et/ou convertisseur**
Elektrisches Betriebsystem versehen mit einer Motor-/Generatorfunktion sowie einer Lader- und/oder Umformerfunktion
Electric traction system including the motor/generator function and the charger and/or converter function

(30) Priorité: 23.10.1991 FR 9113126
(43) Date de publication de la demande: 19.05.1993
(73) Titulaire: AUXILEC, F-78400 Chatou (FR)
(72) Inventeur: Arnaud, Georges, F-92045 Paris la Défense (FR); Jacques, Claude, F-92045 Paris la Défense (FR)
(74) Mandataire: Guérin, Michel

(56) Documents cités:
- EP-A- 0 138 000
- DE-A- 3 132 129
- FR-A- 2 592 342
- GB-A- 2 235 836
- PATENT ABSTRACTS OF JAPAN vol. 7, no. 250 (M-254)8 Novembre 1983 & JP-A-58 136 204
- PATENT ABSTRACTS OF JAPAN vol. 8, no. 166 (M-314)(1603) 2 Août 1984& JP-A-59 061 402

## Description

La présente invention est relative à une chaîne de traction électrique pour véhicules automobiles qui est une chaîne multi-fonctions intégrant la fonction principale de moteur/générateur et les fonctions auxiliaires de chargeur et convertisseur.

Dans le domaine de la technique de traction électrique de véhicules automobiles existe le problème majeur de réduire la quantité et le prix de revient de matière première mise en oeuvre ainsi que le nombre de composants électroniques utilisés pour le contrôle.

La présente invention s'est donc donné pour but de pourvoir à une chaîne de traction électrique pour véhicules automobiles qui répond mieux aux nécessités de la pratique que les chaînes de traction du même type, et visant au même but, antérieurement connues, notamment en ce qu'elle est :
- moins lourde,
- moins chère,
- plus efficace,
- plus fiable,
tout en répondant aux normes de réglementation, et en particulier aux normes de sécurité.

La solution du problème technique évoqué plus haut est définie par des moyens de commutation des enroulements statoriques du moteur électrique de la chaîne de traction électrique objet de la présente invention permettant à ces mêmes enroulements d'accomplir, selon le besoin, non seulement leur fonction principale de moteur/générateur, mais également les fonctions auxiliaires de chargeur et/ou convertisseur.

Le brevet EP-A-0 138 000 décrit un moteur électrique polyphasé avec des enroulements statoriques reliés chacun à un hacheur électronique.

Le brevet GB-A-2 235 836 décrit une chaîne de traction électrique pour véhicule automobile avec un moteur polyphasé avec des enroulements statoriques reliés à des hacheurs électroniques et des moyens pour recharger une batterie auxiliaire à partir de la batterie d'alimentation, ces moyens comportant des enroulements statoriques supplémentaires.

L'abrégé de brevet japonais JP 59-61402 décrit une chaîne de traction pour véhicule électrique dans laquelle le moteur est connecté à un onduleur avec des hacheurs électroniques en fonctionnement, l'onduleur, déconnecté du moteur, sert pour recharger la batterie d'alimentation.

La présente invention propose une chaîne de traction électrique telle qu'exposée dans la revendication 1.

De façon plus précise, la présente invention a pour objet une chaîne de traction pour véhicule automobile, telle qu'une voiture, un camion, un bus, un scooter ou un vélo, comprenant :
- au moins un générateur électrique, notamment électromécanique - et constitué dans ce cas par un moteur thermique d'entraînement d'un générateur, en particulier à courant alternatif, - et/ou électrochimique, constitué par au moins un accumulateur et/ou au moins une pile à combustible ;
- au moins une machine électrique, qui est réversible, - à savoir susceptible de fonctionner comme moteur et générateur frein et, donc, d'assurer notamment la traction électrique dans le fonctionnement moteur -, et qui est du type auto-synchrone, comprenant :
   * un stator pourvu d'au moins un enroulement polyphasé, comprenant un nombre donné d'enroulements statoriques (E₁, E₂, E₃, E₄ ; e₁, e₂, e₃, e₄), - qui correspondent aux différentes phases et qui sont décalés dans l'espace -, et d'un dispositif de commutation séquentielle d'une phase à l'autre permettant de générer un décalage dans le temps, - entre les courants destinés à circuler dans les différents enroulements statoriques -, nécessaire pour la création d'un champ magnétique statorique tournant , et
   * un rotor bobiné, c'est-à-dire comprenant au moins un enroulement rotorique (E₅, E₆) destiné à être traversé par un courant continu de création d'un flux magnétique définissant le champ rotorique ;
- au moins un chargeur embarqué destiné à recharger au moins une batterie d'alimentation, principale ou auxiliaire (Vp) ;
- au moins un convertisseur du courant continu à tension élevée, correspondant à ladite batterie principale ou auxiliaire (Vp), en un courant continu à basse tension destiné à l'alimentation et à la recharge d'une batterie de servitude classique (Vs), dont la tension est notamment de 6 ou 12 V,
laquelle chaîne de traction électrique est caractérisée en ce que des moyens de commutation des enroulements statoriques (E₁, E₂, E₃, E₄) et des principaux composants à semi-conducteurs de l'électronique de puissance de commande de la machine auto-synchrone, - ces enroulements et ces composants étant nécessaires à son fonctionnement fondamental ou principal en moteur et en générateur frein -, assurent la reconfiguration desdits enroulements et desdits composants en au moins un mode de fonctionnement auxiliaire, correspondant notamment audit chargeur et/ou audit convertisseur, permettant ainsi de réduire le nombre des enroulements et des composants à semi-conducteurs nécessaires pour l'accomplissement dudit fonctionnement auxiliaire.

Selon un premier mode de réalisation avantageux de la chaîne de traction électrique conforme à l'invention :
- le stator comporte un premier, un deuxième, un troisième et un quatrième enroulements (E₁, E₂, E₃, E₄) connectés en étoile, qui sont décalés dans l'espace de 90/p degrés mécaniques, - 2p étant le nombre de pôles magnétiques de la machine auto-synchrone, - et qui sont connectés deux à deux de manière à définir un premier et un deuxième groupes d'enroulements (E₁, E₃ ; E₂, E₄), dont le premier groupe comprend lesdits premier et troisième enroulements statoriques (E1, E3), alors que le deuxième groupe comprend lesdits deuxième et quatrième enroulements (E2, E4), en sorte que les enroulements (E1, E3) dudit premier groupe, ainsi que les enroulements (E2, E4) dudit deuxième groupe, sont décalés entre eux de 180 degrés électriques, alors que les premier et deuxième enroulements (E1, E2), ainsi que les troisième et quatrième enroulements (E3, E4) sont décalés entre eux de 90 degrés électriques ;
- les moyens de commutation précités comprennent un premier, un deuxième, un troisième et un quatrième hacheurs (a, A, b, B), qui sont montés en série respectivement avec lesdits premier, deuxième, troisième et quatrième enroulements statoriques (E₁, E₂, E₃, E₄) et qui sont commandés séquentiellement deux à deux (a, A ; b, A ; b, B ; a, B) en commutation, - c'est-à-dire en commandant la commutation des premier et deuxième hacheurs (a, A), puis de la commande des troisième et deuxième hacheurs (b, A), ainsi que des troisième et quatrième hacheurs (b, B), suivie de la commutation des premier et quatrième hacheurs (a, B) - pour permettre d'aiguiller séquentiellement le courant statorique (Ist) dans les enroulements statoriques combinés deux à deux, - c'est-à-dire respectivement dans les premier et deuxième enroulements (E₁, E₂), les troisième et deuxième enroulements (E₃, E₂), les troisième et quatrième enroulements (E₃, E₄), ainsi que dans les premier et quatrième enroulements (E₁, E₄) -, lesdits deuxième et quatrième hacheurs (A, B) étant également commandés en modulation pour contrôler la valeur dudit courant statorique.

Selon une disposition préférée de ce mode de réalisation, lesdits premier et troisième hacheurs (a, b) sont des moyens de commutation bi-directionnels et mécaniques réalisés à l'aide d'une bague (B₁) ainsi que d'une première et une deuxième demi-bagues (B₂, B₃), dont la première (B₂) est connectée électriquement à la bague (B₁), alors que la deuxième demi-bague (B₃) est isolée électriquement de la bague (B₁) ainsi que de la première demi-bague (B₂).

Selon une modalité avantageuse de cette disposition, lesdites bague (B₁) et demi-bagues (B₂, B₃) sont montées sur l'axe rotorique (x-x) de la machine auto-synchrone et glissent respectivement sur un premier, un deuxième et un troisième balais fixes (b₁, b₂, b₃).

Selon une variante avantageuse de cette modalité, lesdites bague (B₁) et demi-bagues (B₂, B₃) sont fixes et viennent en contact de glissement avec un balais double (bt) tournant autour de l'axe rotorique, à l'intérieur desdites bague (B₁) et demi-bagues (B₂, B₃).

Selon une variante de réalisation de ladite disposition, lesdits premier et deuxième hacheurs (a, b) sont des moyens de commutation bi-directionnels à semi-conducteurs, et en ce qu'ils sont commandés par la détection de la position angulaire du rotor par rapport au stator.

Selon une deuxième disposition, chacun desdits deuxième et quatrième hacheur (A, B) est, en fonctionnement moteur et générateur frein, un moyen de commutation bi-directionnel à semi-conducteur.

Selon une modalité avantageuse de cette deuxième disposition, chacun desdits deuxième et quatrième hacheurs (A, B) utilise une diode (d) en fonctionnement moteur, le contrôle du courant statorique (Ist) s'effectuant dans ce cas par un contrôle du courant rotorique (Iro).

Selon d'autres dispositions avantageuses conformes à l'invention,
- dans le fonctionnement moteur, lesdits deuxième et quatrième hacheurs (A, B) sont protégés respectivement par une première et une deuxième diodes, dites de "roue libre" (d₁, d₂) montées chacune en parallèle avec lesdits premier et deuxième enroulements (E₁, E₂) et, respectivement, lesdits troisième et quatrième enroulements (E₃, E₄)
- dans le fonctionnement générateur, l'inversion du sens de circulation du courant dans les enroulements statoriques (E₁, E₂, E₃, E₄), par rapport au sens de circulation du courant dans le fonctionnement moteur, est contrôlée respectivement par une troisième et une quatrième diodes (d₃, d₄) montées chacune en série avec ledit deuxième enroulement (E₂) et, respectivement, ledit quatrième enroulement statorique (E₄) ;
- le courant rotorique (Iro) dans l'enroulement rotorique (E₅) est contrôlé par un cinquième hacheur mono-directionnel (C) protégé par une cinquième diode (d₅).

Selon un autre mode de réalisation préféré de la chaîne de traction électrique conforme à l'invention,
- les moyens de commutation du fonctionnement moteur/générateur frein au fonctionnement chargeur comprennent :
   * un premier contact (c₁), qui travaille en fermeture dans le fonctionnement moteur et respectivement en ouverture dans le fonctionnement chargeur et qui est en série avec ledit premier hacheur (a) ;
   * un deuxième contact (c₂), qui travaille lui aussi en fermeture dans le fonctionnement moteur et respectivement en ouverture dans le fonctionnement chargeur et qui est en série avec ledit troisième hacheur (b) ;
   * un troisième contact (c₃), qui est monté sur le "centre" de la connexion en étoile des enroulements statoriques (E₁, E₂, E₃, E₄) et qui travaille en fermeture dans le fonctionnement moteur, et donc en ouverture dans le fonctionnement chargeur ;
   * un quatrième et un cinquième contacts (c₄, c₅), qui travaillent respectivement en ouverture et en fermeture dans le fonctionnement moteur - et donc respectivement en fermeture et en ouverture dans le fonctionnement chargeur - et qui relient la cathode de ladite quatrième diode (d₄) respectivement à l'entrée et la sortie desdits premier et quatrième enroulements statoriques (E₁, E₄) ;
- lesdits contacts (c₁ à c₅) permettent de changer les connexions entre les enroulements statoriques (E₁, E₂, E₃, E₄) et les composants électroniques correspondants de manière telle que, lorsque lesdits contacts travaillent dans le sens correspondant au fonctionnement chargeur, ils permettent, par ouverture desdits premier, deuxième et troisième contacts (c₁, c₂, c₃) de connecter, d'une part, lesdits troisième et quatrième enroulements statoriques (E₃, E₄) en série entre eux, pour constituer l'enroulement primaire d'un transformateur et, d'autre part, lesdits premier et deuxième enroulements (E₁, E₂) également en série entre eux pour constituer l'enroulement secondaire dudit transformateur, alors que par fermeture et ouverture respectivement desdits quatrième et cinquième contacts (c₄, c₅) lesdits premier, deuxième, troisième et quatrième diodes (d₁, d₂, d₃, d₄) sont connectées entre elles de manière à constituer les éléments d'un pont redresseur connecté audit secondaire (E₁ + E₂) du transformateur et destiné à recharger la batterie principale ou auxiliaire, lorsque la force électromotrice est supérieure à la tension d'alimentation ;
- le courant de charge de cette batterie est contrôlé dans l'enroulement primaire (E₃ + E₄) dudit transformateur par un sixième et septième hacheurs(D, E) ; et
- en ce qu'un sixième contact (c₆), qui travaille en fermeture dans le fonctionnement moteur, et donc en ouverture dans le fonctionnement chargeur, isole conjointement avec lesdits deuxième, troisième et cinquième contacts (c₂, c₃, c₅) l'enroulement primaire de l'enroulement secondaire du transformateur, et donc le secteur de la batterie (Vp).

Selon une disposition avantageuse de cet autre mode de réalisation, au moins un desdits cinquième et sixième hacheurs (D, E) est constitué, dans le fonctionnement chargeur, par un desdits deuxième et quatrième hacheurs (A,B) utilisés dans le fonctionnement moteur/générateur frein.

Selon une autre disposition préférée de cet autre mode de réalisation, le stator de la machine auto-synchrone comporte un cinquième, sixième, septième et huitième enroulements statoriques (e₁, e₂, e₃, e₄) supplémentaires connectés en série entre eux et couplés respectivement auxdits premier, deuxième, troisième et quatrième enroulements statoriques principaux (E₁, E₂, E₃, E₄), en sorte que, quelle que soit la condition de travail desdits contacts (c₁ à c₆), c'est-à-dire quel que soit le fonctionnement de départ, moteur/générateur frein ou chargeur, lesdits enroulements statoriques supplémentaires, (e₁, e₂, e₃, e₄) constituent le secondaire d'un transformateur qui permet de convertir, - après redressement par une sixième et septième diodes (d₆, d₇) et contrôle par un régulateur de charge (R_{ch}) -, le courant continu à tension élevée de la batterie, principale ou auxiliaire (Vp), en un courant continu à basse tension destiné à l'alimentation et à la recharge d'une batterie de servitude classique (Vs).

Selon encore une autre disposition conforme à l'invention, le rotor comporte un enroulement rotorique supplémentaire (E₆), qui est connecté entre lesdites bague (B₁) et première demi-bague (B₂) et qui utilise la présence au rotor du courant statorique (Ist) pour renforcer ainsi les ampères-tours de l'enroulement rotorique principal (E₅), la protection desdits deuxième et quatrième hacheurs étant assurée par une sixième diode (d₆), dite de "roue libre", montée en parallèle avec ledit enroulement rotorique supplémentaire (E₆).

Dans la description qui suit, on détaille le fonctionnement fondamental en moteur et en générateur frein ainsi que les fonctionnements auxiliaires en chargeur et en convertisseur, tout en tenant compte des conditions spécifiques au sens de marche, au contrôle de la vitesse et du couple ainsi qu'aux hacheurs ; en outre, on décrit également une version intéressante de compoundage qui est susceptible d'être utilisée dans le cadre de la présente invention. Dans cette description, il a été pris, à titre d'exemple, le cas d'une machine auto-synchrone de traction électrique à quatre enroulements statoriques et à deux pôles, avec rotor bobiné.

### I - DESCRIPTION DU FONCTIONNEMENT EN MOTEUR

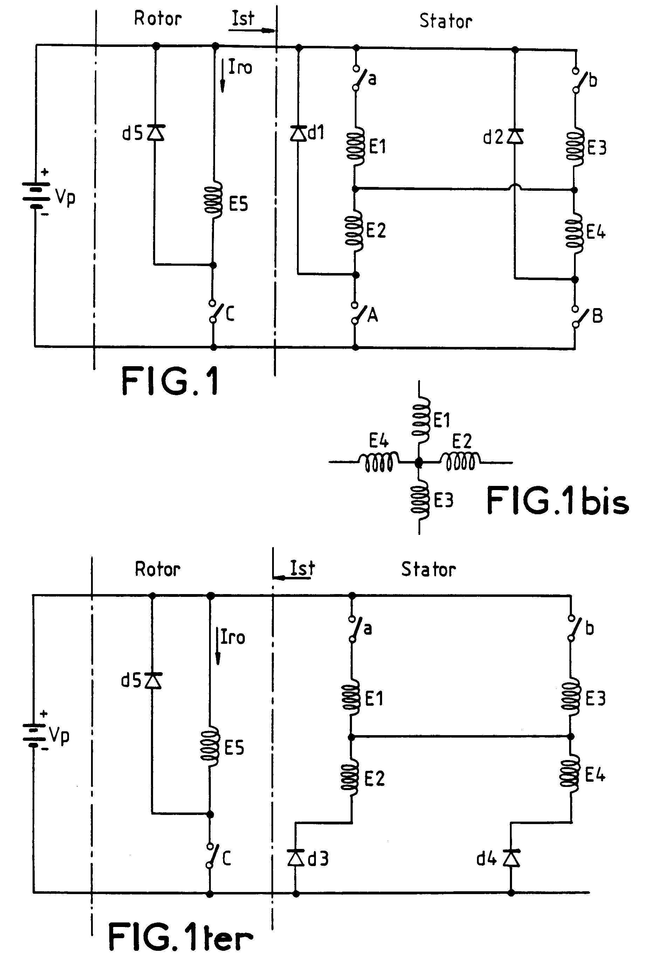

Les quatre enroulements statoriques E₁, E₂, E₃, E₄ du schéma de la figure 1 sont montés en étoile. E₁ et E₃, E₂ et E₄ sont décalés entre eux de 180 degrés électriques, alors que les enroulements E₁ et E₂ - et donc E₃ et E₄ - sont décalés entre eux de 90 degrés électriques ( voir figure 1bis).

Les deux paires de hacheurs a, b et A, B permettent d'aiguiller le courant statorique Ist successivement dans les enroulements E₁ + E₂, E₃ + E₂, E₃ + E₄, E₁ + E₄, créant ainsi un champ tournant.

Les hacheurs A et B assurent, en plus de l'aiguillage du courant statorique nécessaire pour la création du champ tournant statorique, un contrôle de sa valeur (par une modulation appropriée, telle qu'elle sera précisée par la suite).

Les diodes d₁ et d_{2,} dites de "roue libre", assurent la protection des hacheurs A et B en entretenant le passage du courant dans les enroulements statoriques jusqu'à extinction naturelle de ce courant dans ces enroulements.

Le courant Iro de l'enroulement rotorique E_{5,} contrôlé par le hacheur C et protégé par la diode de "roue libre" d_{5,} assure la création du champ rotorique.

Le contrôle électronique de ces champs est tel que ceux-ci sont maintenus en quadrature grâce à des capteurs de la position angulaire du rotor, donnant ainsi un couple maximum.

Les enroulements E₁ + E₂, E₂ + E₃, E₃ + E₄, E₄ + E₁ sont le siège de forces contre-électromotrices alternatives, dont l'amplitude est, - dans le fonctionnement en moteur objet de la présente description -, inférieure à la tension d'alimentation de la batterie Vₚ.

### II - DESCRIPTION DU FONCTIONNEMENT EN GENERATEUR FREIN

Bien entendu, dans ce mode de fonctionnement (figure 1ter), on suppose que la machine tourne.

Une augmentation du courant rotorique Iro (bien entendu, dans la zone de fonctionnement non saturée de la machine), commandée par le hacheur C, se traduit par une augmentation des forces contre-électromotrices dans les enroulements E₁ + E₂, E₂ + E₃, E₃ + E₄, E₄ + E₁ qui, devenant supérieures à la tension de la batterie Vₚ, permettent - grâce aux diodes d₃ et d_{4,} le passage d'un courant statorique Ist de sens opposé à celui du fonctionnement en moteur. Dans ce sens, il y a bien génération de courant et charge de la batterie Vₚ.

Le contrôle de ce courant de charge s'effectue par le contrôle du courant rotorique Iro, comme indiqué ci-dessus.

La superposition des schémas 1 et 1ter assure le double fonctionnement en moteur et générateur.

### III - DESCRIPTION DU FONCTIONNEMENT EN CHARGEUR

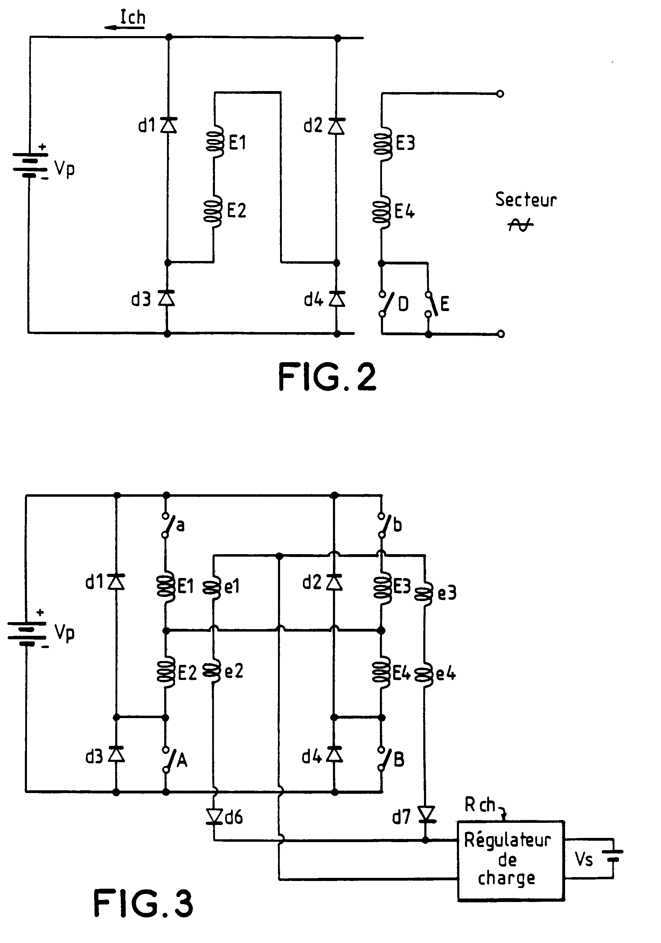

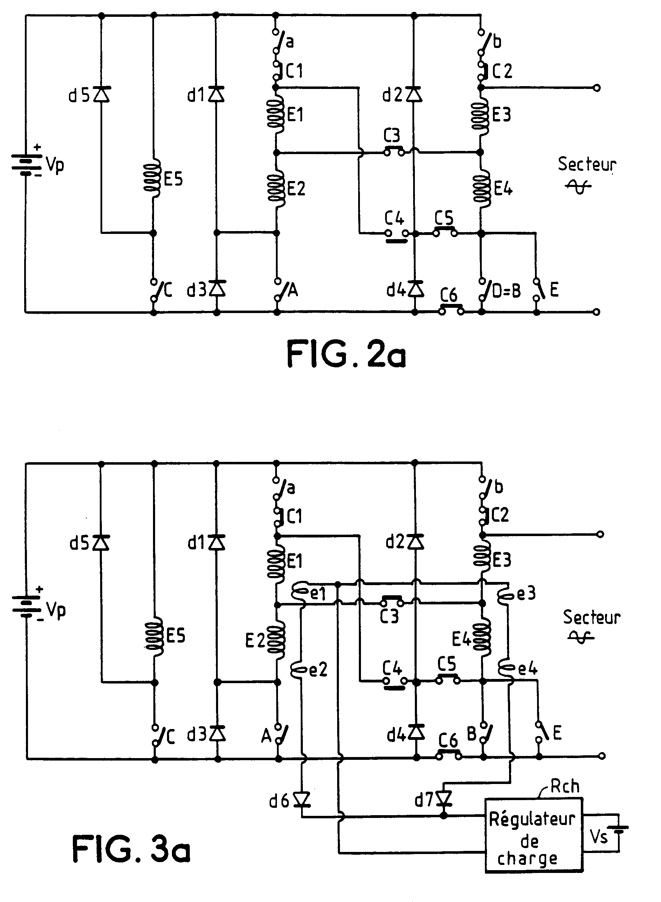

Dans le schéma illustré à la figure 2, on suppose que l'on a reconfiguré les connexions des différents composants et que l'on a déconnecté l'enroulement rotorique (qui n'a pas été représenté). Le schéma de principe de la figure 2a illustre un exemple de réalisation de la commutation pour le passage du fonctionnement moteur ou générateur frein au fonctionnement chargeur. Dans cette figure 2a, les contacts représentés c₁ à c₆ correspondent à leur position en fonctionnement moteur, la prise du secteur (à droite dans la figure) n'étant pas branchée, alors qu'en position inversée, ces contacts correspondent à la fonction chargeur (la prise du secteur étant branchée dans ce cas).

On retrouve les enroulements E₁ + E2 et E₃ + E₄, qui constituent respectivement le secondaire et le primaire d'un transformateur.

Les diodes d_{1,} d_{2,} d_{3,} d₄ constituent les éléments d'un pont redresseur connecté au secondaire E₁ + E₂ et capable de charger la batterie Vₚ, si la force électromotrice est supérieure à la tension d'alimentation.

Le courant de charge est contrôlé au primaire E₃ + E₄ par les deux hacheurs D et E, qui peuvent être ou non constitués par les hacheurs A et B de la figure 1, la réutilisation de ces hacheurs étant préférée dans le cadre de la présente invention.

### IV - DESCRIPTION DU FONCTIONNEMENT EN CONVERTISSEUR

Si dans le schéma du fonctionnement en moteur/générateur, on place quatre enroulements e_{1,} e_{2,} e_{3,} e_{4,} respectivement couplés aux enroulements E₁ E_{2,} E₃, E₄, tels qu'ils sont représentés sur le schéma illustré à la figure 3, ces enroulements constituent le secondaire avec point milieu d'un transformateur qui, s'ils sont bien dimensionnés en appliquant les règles de l'art connues des techniciens en la matière, peuvent - après redressement par les diodes d₆, d₇ et contrôle par un régulateur de charge R_{ch} - constituer le convertisseur basse tension monté en parallèle avec la batterie classique de servitude Vs (normalement de 6 ou 12 V). Le schéma de principe de la figure 3a illustre un exemple de réalisation de la commutation pour le passage du fonctionnement moteur/générateur frein ou chargeur au fonctionnement convertisseur. Dans cette figure 3a, les contacts c₁ à c₆ sont représentés dans la position correspondant au fonctionnement moteur-générateur frein (comme dans la figure 2a). Mais il est clair que le fonctionnement convertisseur peut-être également obtenu à partir des mêmes contacts c1 à c6 dans la position correspondant au fonctionnement chargeur. Cela revient à dire que le fonctionnement convertisseur peut-être obtenu soit avec la machine auto-synchrone en marche soit avec cette machine à l'arrêt.

### V - CONTROLE DU SENS DE MARCHE

Pour inverser le sens de marche du moteur, il suffit d'inverser la phase des hacheurs A et B.

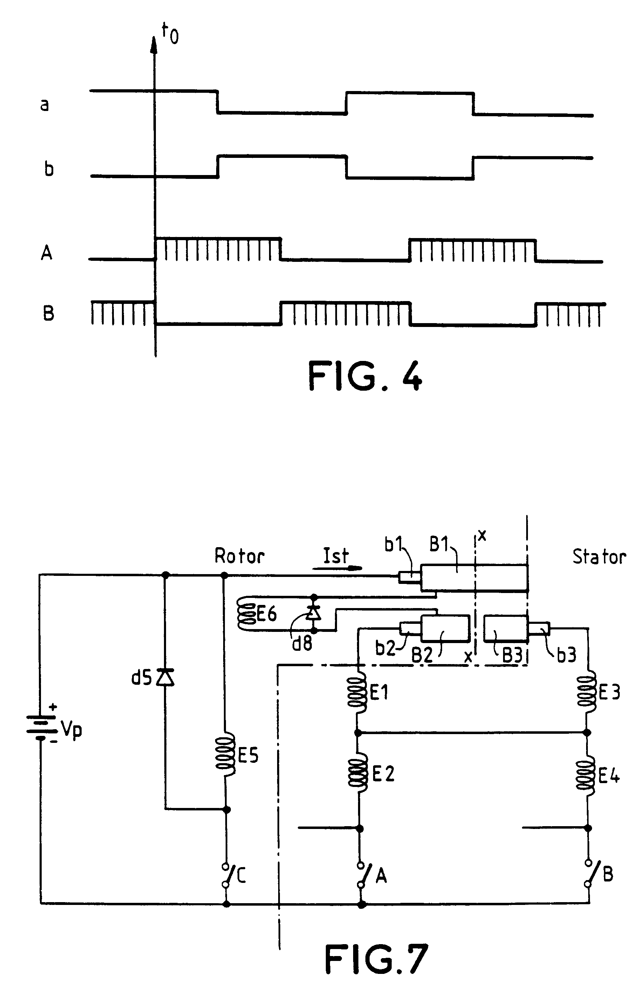

Dans le cas de la figure 4, on a successivement l'excitation des enroulements E₁ + E₂, E₃ + E₂, E₃ + E₄, E₁ + E₄. L'inversion des phases hacheurs B et A conduirait au séquencement suivant : E₁ + E₄, E₃ + E₄, E₃ + E₂, E₁ + E₂, montrant ainsi l'inversion du sens de rotation.

### VI - CONTROLE DE LA VITESSE ET DU COUPLE

Le contrôle de la vitesse et du couple s'effectue par une double action sur les courants rotoriques et statoriques.

Cette double action permet de couvrir, si elle est parfaitement maîtrisée (contrôle digital par processeur en temps réel), et ce avec un rendement maximum, toute la plage de fonctionnement couple-vitesse du moteur de traction dans ses diverses sollicitations.

### VII - FONCTIONNEMENT DES HACHEURS

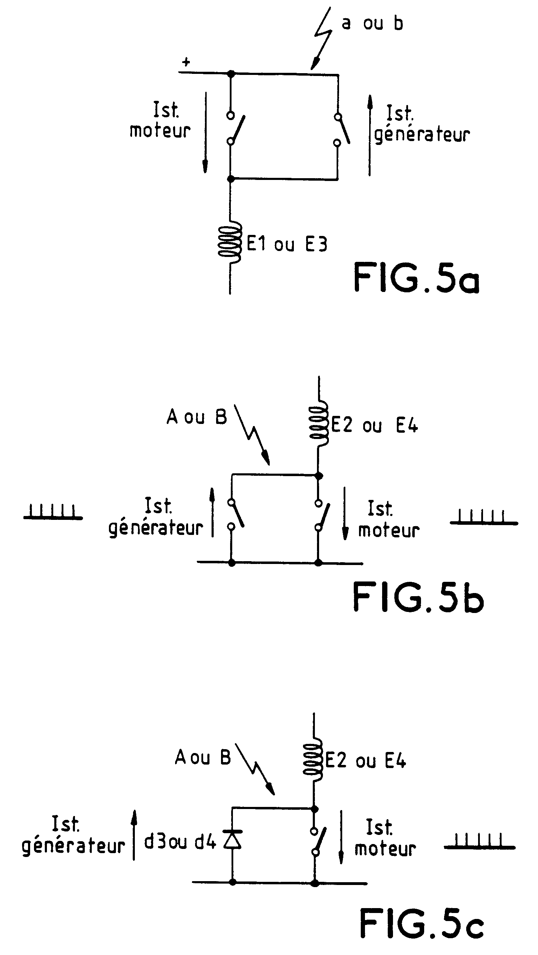

Les hacheurs a et b en fonctionnement moteur et générateur sont des interrupteurs bi-directionnels (fig. 5a). Ces interrupteurs (ouverts ou fermés) peuvent être électroniques (transistor bipolaire-MOSFET-IGBT - Thyristor etc...) ou mécaniques. Ils sont commandés automatiquement par la détection de la position angulaire du rotor (capteurs ou structure mécanique respectivement).

Les hacheurs A et B en fonctionnement moteur et générateur sont eux aussi des interrupteurs bi-directionnels (fig. 5b).

Ces interrupteurs sont électroniques et assurent, en plus de l'aiguillage du courant statorique dans les enroulements E₂ et E₄, le contrôle de la valeur de ce courant en fonction de la position angulaire du rotor et en fonction du couple souhaité (ce contrôle peut s'effectuer par tous les types de modulation possibles y compris la modulation PWM). De façon plus précise, étant donné que la commande des courants statoriques est fonction de la position angulaire du rotor, on détecte cette position au moyen de capteurs de position angulaire, de manière à permettre, après traitement dans un processeur, la commande des hacheurs en commutation et modulation pour optimiser le fonctionnement et le rendement du moteur et du générateur frein.

Une variante (fig. 5c) utilise une diode pour le fonctionnement hacheur en générateur, le contrôle du courant statorique s'effectuant dans ce cas par un contrôle du courant rotorique.

### VIII - HACHEURS a, b MECANIQUES

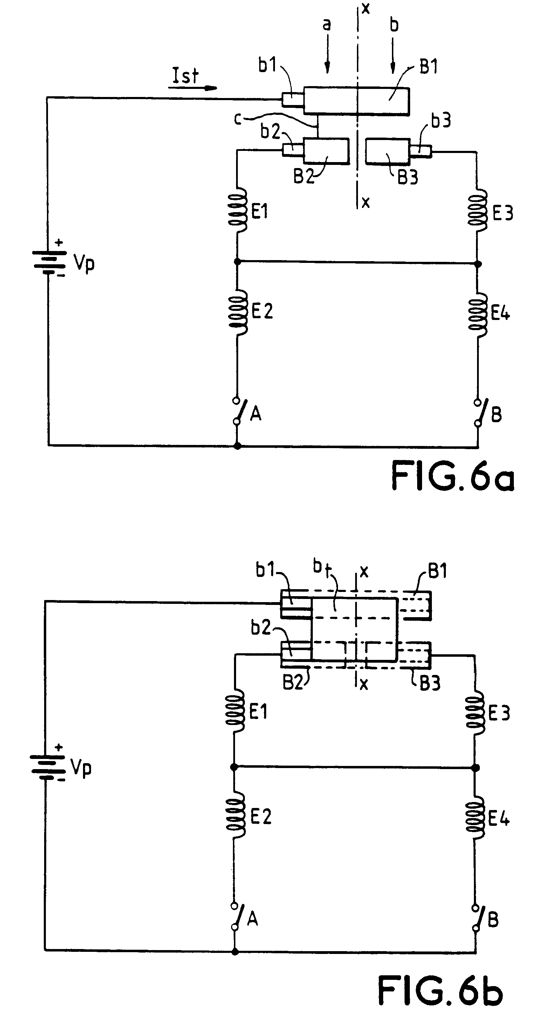

L'aiguillage du courant statorique peut s'effectuer au moyen de bagues et de balais. Les figures 6 donnent deux exemples de réalisation :
* **Figure 6 a.**
   Dans la figure 6a, le courant statorique passe du balai fixe b₁, par contact glissant, à une bague tournante B₁, laquelle est connectée (connexion c) à une demi-bague B₂ solidaire, comme B₁, du rotor ; puis par le balai fixe b₂, le courant statorique alimente l'enroulement E₁, (la demi-bague B₃ est isolée de la demi-bague B₂ et de la bague B₁).
   Après une rotation d'un demi-tour, la demi-bague B₂ alimente, par le balai fixe b₃ l'enroulement E₃.
   Le contrôle électronique du courant par les hacheurs A et B peut-être tel que les courants coupés par les balais soient faibles, voire nuls, pour en limiter l'usure.
* **Variante figure 6 b**
   Dans cette variante un balai double tournant bt assure la mise en court circuit successivement, lors de sa rotation, de la bague fixe B₁ et de la demi-bague fixe B₂ alimentant ainsi l'enroulement E₁, puis un demi-tour plus tard, il court-circuite la bague fixe B₁ et la demi-bague fixe B₃, alimentant ainsi l'enroulement E₃.

### IX - COMPOUNDAGE

La figure 7 représente une version possible du compoundage.

La présence au rotor du courant statorique permet son utilisation dans un enroulement complémentaire d'excitation E₆ qui renforce les Ampères-tours de l'enroulement d'excitation de l'enroulement E₅. Cette possibilité confère à la machine des caractéristiques couple-vitesse et rendement intéressantes en termes de flexibilité et économie énergétique.

La diode de "roue libre" d₈ assure la protection des hacheurs A et B et facilite le fonctionnement en générateur.

## Revendications

1. Chaîne de traction électrique pour véhicule automobile, tel qu'une voiture, un camion, un bus, un scooter ou un vélo, comprenant :
- au moins un générateur, notamment électromécanique et/ou électrochimique, constitué dans ce dernier cas par au moins un accumulateur et/ou au moins une pile à combustible ;
- au moins une machine électrique, qui est réversible, et qui est du type auto-synchrone, comprenant :
* un stator pourvu d'au moins un ensemble d'enroulements statoriques (E₁, E₂, E₃, E₄) connectés en étoile et d'un dispositif de commutation séquentielle d'une phase à l'autre permettant de générer un décalage dans le temps entre les courants destinés à circuler dans les différents enroulements statoriques, nécessaire pour la création d'un champ magnétique statorique tournant, et
* un rotor bobiné comprenant au moins un enroulement rotorique (E₅, E₆) destiné à être traversé par un courant continu de création d'un flux magnétique définissant le champ rotorique ;
- au moins un chargeur embarqué destiné à recharger au moins une batterie d'alimentation, principale ou auxiliaire (Vp) ;
- au moins un convertisseur du courant continu à tension élevée, correspondant à ladite batterie principale ou auxiliaire (Vp), en un courant continu à basse tension destiné à l'alimentation et à la recharge d'une batterie de servitude classique (Vs), dont la tension est notamment de 6 ou 12V,
laquelle chaîne de traction électrique est caractérisée en ce qu'elle comporte des moyens pour reconfigurer le stator en au moins un mode de fonctionnement auxiliaire, correspondant notamment au mode chargeur et/ou au mode convertisseur,
et en ce que l'ensemble d'enroulements statoriques comporte quatre enroulements (E₁, E₂, E₃, E₄), le dispositif de commutation séquentielle d'une phase à l'autre comportant une paire de hacheurs électroniques (A, B) dont l'un est relié au deuxième enroulement (E₂) et l'autre au quatrième enroulement (E₄) et des moyens de commutation mécaniques bidirectionnels (a,b), connectés entre le générateur électrique et les deux autres enroulements statoriques (E₁, E₃) pour aiguiller le courant fourni par le générateur dans les enroulements statoriques, ces moyens de commutation mécaniques étant réalisés à l'aide d'une bague (B1) et de deux demi-bagues (B2, B3) dont la première (B2) est connectée électriquement à la bague (B1) et dont la seconde (B3) est isolée électriquement de la bague (B1) et de la première demi-bague (B2).

2. Chaîne de traction électrique selon la revendication 1, caractérisée en ce que lesdites bague (B₁) et demi-bagues (B₂, B₃) sont montées sur l'axe rotorique (x-x) de la machine auto-synchrone et glissent respectivement sur un premier, un deuxième et un troisième balais fixes (b₁, b₂, b₃).

3. Chaîne de traction électrique selon la revendication 1, caractérisée en ce que lesdites bague (B₁) et demi-bagues (B₂, B₃) sont fixes et viennent en contact de glissement avec un balais double (bt) tournant autour de l'axe rotorique, à l'intérieur desdites bagues (B₁) et demibagues (B₂, B₃).

4. Chaîne de traction électrique selon l'une des revendications 1 à 3, caractérisée en ce que les hacheurs électroniques (A, B) de la paire sont bidirectionnels en fonctionnement moteur et générateur frein.

5. Chaîne de traction électrique selon l'une des revendications 1 à 3, caractérisée en ce que les hacheurs électroniques (A, B) de la paire sont montés en parallèle avec une diode en fonctionnement moteur, le contrôle du courant statorique (Ist) s'effectuant dans ce cas par un contrôle du courant rotorique (Iro).

6. Chaîne de traction électrique selon l'une des revendications 1 à 5, caractérisée en ce que :
- dans le fonctionnement moteur, les hacheurs électroniques (A, B) de la paire sont protégés respectivement par une première et une deuxième diodes, dites de "roue libre" (d₁, d₂) montées chacune en parallèle entre lesdits premier et deuxième enroulements (E₁, E₂) et les moyens de commutation mécaniques et, respectivement, entre lesdits troisième et quatrième enroulements (E₃, E₄) et les moyens de commutation mécaniques ;
- dans le fonctionnement générateur, l'inversion du sens de circulation du courant dans les enroulements statoriques (E₁, E₂, E₃, E₄), par rapport au sens de circulation du courant dans le fonctionnement moteur, est contrôlée respectivement par une troisième et une quatrième diodes (d₃, d₄) montées chacune en série avec ledit deuxième enroulement (E₂) et, respectivement, ledit quatrième enroulement statorique (E₄) ;
- le courant rotorique (Iro) dans enroulement rotorique (E₅) est contrôlé par un troisième hacheur mono-directionnel (C) protégé par une cinquième diode (d₅).

7. Chaîne de traction électrique selon la revendication 6, caractérisée :
- en ce que les moyens pour reconfigurer le stator du fonctionnement moteur/générateur frein au fonctionnement chargeur comprennent :
* un premier contact (c₁), qui travaille en fermeture dans le fonctionnement moteur et respectivement en ouverture dans le fonctionnement chargeur et qui est en série avec les moyens de commutation mécaniques ;
* un deuxième contact (c₂), qui travaille lui aussi en fermeture dans le fonctionnement moteur et respectivement en ouverture dans le fonctionnement chargeur et qui est en série avec les moyens de commutation mécaniques ;
* un troisième contact (c₃), qui est monté sur le "centre" de la connexion en étoile des enroulements statoriques (E₁, E₂, E₃, E₄) et qui travaille en fermeture dans le fonctionnement moteur, et donc en ouverture dans le fonctionnement chargeur ;
* un quatrième et un cinquième contacts (c₄, c₅), qui travaillent respectivement en ouverture et en fermeture dans le fonctionnement moteur et donc respectivement en fermeture et en ouverture dans le fonctionnement chargeur et qui relient la cathode de ladite quatrième diode (d₄) respectivement au premier et quatrième enroulements statoriques (E₁, E₄) ;
- en ce que lesdits contacts (c₁ à c₅) permettent de changer les connexions entre les enroulement statoriques (E₁, E₂, E₃, E₄) et les composants électroniques correspondants de manière telle que, lorsque lesdits contacts travaillent dans le sens correspondant au fonctionnement chargeur, ils permettent, par ouverture desdits premier, deuxième et troisième contacts (c₁, c₂, c₃) de connecter, d'une part, lesdits troisième et quatrième enroulements statoriques (E₃, E₄) en série entre eux, pour constituer l'enroulement primaire d'un transformateur destiné a être relié au secteur et, d'autre part, lesdits premier et deuxième enroulements (E₁, E₂) également en série entre eux pour constituer l'enroulement secondaire dudit transformateur, alors que par fermeture et ouverture respectivement desdits quatrième et cinquième contacts (c₄, c₅) lesdits premier, deuxième, troisième et quatrième diodes (d₁, d₂, d₃, d₄) sont connectées entre elles de manière à constituer les éléments d'un pont redresseur connecté audit secondaire (E₁ + E₂) du transformateur et destiné à recharger la batterie principale ou auxiliaire, lorsque la force électromotrice est supérieure à la tension d'alimentation ;
- en ce que le courant de charge de cette batterie est contrôlé dans l'enroulement primaire (E₃ + E₄) dudit transformateur par un quatrième et cinquième hacheurs (D, E) ; et
- en ce qu'un sixième contact (c₆), qui travaille en fermeture dans le fonctionnement moteur, et donc en ouverture dans le fonctionnement chargeur, isole conjointement avec lesdits deuxième, troisième et cinquième contacts (c₂, c3, c₅) l'enroulement primaire de l'enroulement secondaire du transformateur, et donc le secteur de la batterie (Vp).

8. Chaîne de traction électrique selon la revendication 7, caractérisée en ce qu'au moins un desdits quatrième et cinquième hacheurs (D, E) est constitué, dans le fonctionnement chargeur, par un desdits hacheurs de la paire (A, B) utilisés dans le fonctionnement moteur/générateur frein.

9. Chaîne de traction électrique selon la revendication 1, caractérisée en ce que le stator de la machine auto-synchrone comporte quatre enroulements statoriques (e₁, e₂, e₃, e₄) supplémentaires connectés en série entre eux et coupés respectivement auxdits premier, deuxième, troisième et quatrième enroulements statoriques (E₁, E₂, E₃, E₄), en sorte que, lesdits enroulements statoriques supplémentaires, (e₁, e₂, e₃, e₄) constituent le secondaire d'un transformateur qui permet de convertir, le courant continu à tension élevée de la batterie, principale ou auxiliaire (Vp), en un courant continu à basse tension destiné à l'alimentation et à la recharge d'une batterie de servitude classique (Vs).

10. Chaîne de traction électrique selon l'une quelconque des revendications 1 à 9, caractérisée en ce que le rotor comporte un enroulement rotorique supplémentaire (E₆), qui est connecté entre lesdites bague (B₁) et première demi-bague (B₂) et qui utilise la présence au rotor du courant statorique (Ist) pour renforcer ainsi les ampères-tours de l'enroulement rotorique principal (E₅), la protection des hacheurs de la paire étant assurée par une sixième diode (d₆), dite de "roue libre", montée en paralléle avec ledit enroulement rotorique supplémentaire (E₆).

## Claims

1. Electrical traction system for a motor vehicle, such as a car, a lorry, a bus, a scooter or a moped, comprising:
- at least one generator, especially an electromechanical and/or electrochemical generator, consisting in the latter case of at least one storage cell and/or at least one fuel cell;
- at least one electrical machine, which is reversible and which is of the self-synchronous type, comprising:
* a stator provided with at least one set of star-connected stator windings (E₁, E₂, E₃, E₄) and with a device for sequential commutation from one phase to the other making it possible to generate a shift in time between the currents intended to flow in the various stator windings, this shift being necessary in order to create a rotating stator magnetic field,
* a wound rotor comprising at least one rotor winding (E₅, E₆) through which a DC current is intended to flow in order to create a magnetic flux defining the rotor field;
- at least one onboard charger intended to recharge at least one main or auxiliary power supply battery (Vp);
- at least one convertor for converting a high-voltage DC current, corresponding to the said main or auxiliary battery (Vp), into a low-voltage DC current intended for the power supply and for the recharging of a conventional services battery (Vs), the voltage of which is especially 6 V or 12 V,
which electrical traction system is characterized in that it includes means for reconfiguring the stator into at least one auxiliary operation mode, corresponding especially to the charger mode and/or to the convertor mode, and in that the set of stator windings includes four windings (E₁, E₂, E₃, E₄), the device for sequential commutation from one phase to the other including a pair of electronic choppers (A, B), one of which is connected to the second winding (E₂) and the other to the fourth winding (E₄) and two-way mechanical commutation means (a, b) which are connected between the electrical generator and the two other stator windings (E₁, E₃) in order to switch the current provided by the generator into the stator windings, these mechanical commutation means being produced by means of a ring (B1) and of two half-rings (B2, B3) the first half-ring (B2) of which is electrically connected to the ring (B1) and the second half-ring (B3) of which is electrically isolated from the ring (B1) and from the first half-ring (B2).

2. Electrical traction system according to Claim 1, characterized in that the said ring (B₁) and the said half-rings (B₂, B₃) are mounted on the rotor axis (x-x) of the self-synchronous machine and slip respectively over a first, a second and a third fixed brush (b₁, b₂, b₃).

3. Electrical traction system according to Claim 1, characterized in that the said ring (B₁) and the said half-rings (B₂, B₃) are fixed and come into sliding contact with a double brush (bt) rotating about the rotor axis, inside the said ring (B₁) and the said half-rings (B₂, B₃).

4. Electrical traction system according to one of Claims 1 to 3, characterized in that the electronic choppers (A, B) of the pair are two-way choppers operating as a motor and brake generator.

5. Electrical traction system according to either of Claims 1 to 3, characterized in that the electronic choppers (A, B) of the pair are connected in parallel with a diode in motor operation, the stator current (Ist) being controlled in this case by controlling the rotor current (Iro).

6. Electrical traction system according to one of Claims 1 to 5, characterized in that :
- in motor operation, the electronic choppers (A, B) of the pair are protected respectively by a first and second so-called "freewheeling" diode (d₁, d₂) each being connected in parallel between the said first and second windings (E₁, E₂) and the mechanical commutation means and, respectively, between the said third and fourth windings (E₃, E₄) and the mechanical commutation means;
- in generator operation, the reversal of the direction of current flow in the stator windings (E₁, E₂, E₃, E₄), with respect to the direction of current flow in motor operation, is controlled respectively by a third and a fourth diode (d₃, d₄) each connected in series with the said second winding (E₂) and, respectively, the said fourth stator winding (E₄);
- the rotor current (Iro) in the rotor winding (E₅) is controlled by a third, one-way chopper (C) protected by a fifth diode (d₅).

7. Electrical traction system according to Claim 6, characterized:
- in that the means for reconfiguring the stator from motor/brake-generator operation to charger operation comprise:
* a first contact (c₁) which works, respectively, in the closed state in motor operation and in the open state in charger operation and which is in series with the mechanical commutation means;
* a second contact (c₂) which also works, respectively, in the closed state in motor operation and in the open state in charger operation and which is in series with mechanical commutation means;
* a third contact (c₃) which is connected to the "centre" of the star connection of the stator windings (E₁, E₂, E₃, E₄) and which works in the closed state in motor operation, and therefore in the open state in charger operation;
* a fourth and a fifth contact (c₄, c₅) which work, respectively, in the open state and in the closed state in motor operation and therefore, respectively, in the closed state and in the open state in charger operation, and which link the cathode of the said fourth diode (d₄) respectively to the first and fourth stator windings (E₁, E₄);
- in that the said contacts (c₁ to c₅) make it possible to change the connections between the stator windings (E₁, E₂, E₃, E₄) and the corresponding electronic components in such a way that, when the said contacts work in the direction corresponding to charger operation, they make it possible, by opening the said first, second and third contacts (c₁, c₂, c₃) to connect, on the one hand, the said third and fourth stator windings (E₃, E₄) together in series in order to form the primary winding of a transformer intended to be connected to the mains supply and, on the other hand, the said first and second windings (E₁, E₂) together also in series in order to form the secondary winding of the said transformer, while by respectively closing and opening the said fourth and fifth contacts (c₄, c₅) the said first, second, third and fourth diodes (d₁, d₂, d₃, d₄) are connected together so as to form the elements of a rectifier bridge connected to the said secondary (E₁ + E₂) of the transformer and intended to recharge the main or auxiliary battery, when the electromotive force is greater than the supply voltage;
- in that the current for charging this battery is controlled in the primary winding (E₃ + E₄) of the said transformer by a fourth and a fifth chopper (D, E); and
- in that a sixth contact (c₆), which works in the closed state in motor operation, and therefore in the open state in charger operation, isolates, in conjunction with the said second, third and fifth contact (c₂, c₃, c₅), the primary winding from the secondary winding of the transformer, and therefore the mains supply from the battery (Vp).

8. Electrical traction system according to Claim 7, characterized in that at least one of the said fourth and fifth choppers (D, E) consists, in charger operation, of one of the said choppers of the pair (A, B) which are used in motor/brake-generator operation.

9. Electrical traction system according to Claim 1, characterized in that the stator of the self-synchronous machine includes four additional stator windings (e₁, e₂, e₃, e₄) which are connected together in series and coupled, respectively, to the said first, second, third and fourth stator windings (E₁, E₂, E₃, E₄) so that the said additional stator windings (e₁, e₂, e₃, e₄) form the secondary of a transformer which makes it possible to convert the high-voltage DC current of the main or auxiliary battery (Vp) into a low-voltage DC current intended for the power supply and for the recharging of a conventional services battery (Vs).

10. Electrical traction system according to any one of Claims 1 to 9, characterized in that the rotor includes an additional rotor winding (E₆) which is connected between the said ring (B₁) and the said first half-ring (B₂) and which uses the presence in the rotor of the stator current (Ist) in order thus to increase the ampere-turns of the main rotor winding (E₅), the choppers of the pair being protected by a sixth so-called "free-wheeling" diode (d₆) connected in parallel with the said additional rotor winding (E₆).

## Patentansprüche

1. Elektrisches Antriebssystem für ein Kraftfahrzeug, beispielsweise einen Personenkraftwagen, einen Lastkraftwagen, einen Omnibus, einen Motorroller oder ein Motorrad, mit:
- wenigstens einem Generator, insbesondere elektromechanischer und/oder elektrochemischer Art, der im zuletzt genannten Fall durch wenigstens einen Akkumulator und/oder eine Brennstoffzelle gebildet ist;
- wenigstens einer elektrischen Maschine, die reversibel und vom Autosynchron-Typ ist und enthält:
* einen Stator, der mit wenigstens einer Gruppe von im Stern geschalteten Statorwicklungen (E₁, E₂, E₃, E₄) und einer Einrichtung zur sequentiellen Kommutierung von Phase zu Phase ausgestattet ist, die es ermöglicht, zwischen den Strömen, die durch die verschiedenen Statorwicklungen fließen, eine zeitliche Verschiebung zu erzeugen, die zur Erzeugung eines magnetischen Statordrehfeldes erforderlich ist, und
* einen gewickelten Rotor, der wenigstens eine Rotorwicklung (E₅, E₆) aufweist, durch die ein Gleichstrom fließen soll, der einen das Rotorfeld definierenden Magnetfluß erzeugt;
- wenigstens einer an Bord befindlichen Ladeeinrichtung, die dazu bestimmt ist, wenigstens eine Haupt- oder Hilfs-Stromversorgungsbatterie (Vp) nachzuladen;
- wenigstens einem Umformer zur Umformung des Gleichstroms mit der der Haupt- oder Hilfsbatterie (Vp) entsprechenden hohen Spannung in einen Gleichstrom niedriger Spannung zur Stromversorgung und Nachladung einer herkömmlichen Fahrzeugbatterie (Vs), deren Spannung insbesondere 6 oder 12 V beträgt,
wobei dieses elektrische Antriebssystem dadurch gekennzeichnet ist, daß es Mittel zur Umkonfiguration des Stators in wenigstens eine Hilfsbetriebsart enthält, die insbesondere dem Ladebetrieb und/oder dem Umformerbetrieb entspricht,
und daß die Statorwicklungsgruppe vier Wicklungen (E₁, E₂, E₃, E₄) enthält, wobei die Einrichtung zur sequentiellen Kommutierung von Phase zu Phase ein Paar elektronische Zerhacker (A, B) enthält, von denen der eine mit der zweiten Wicklung (E₂) und der andere mit der vierten Wicklung (E₄) verbunden ist, sowie mechanische Zweirichtungs-Umschaltmittel (a, b), die zwischen dem elektrischen Generator und den beiden anderen Statorwicklungen (E₁, E₃) angeschlossen sind, um den vom Generator gelieferten Strom auf die Statorwicklungen zu verteilen, wobei die mechanischen Umschaltmittel mit Hilfe eines Rings (B1) und zweier Halbringe (B2, B3) gebildet sind, von denen der erste Halbring (B2) elektrisch mit dem Ring (B1) verbunden ist und der zweite Halbring (B3) elektrisch von dem Ring (B1) und von dem ersten Halbring (B2) isoliert ist.

2. Elektrisches Antriebssystem nach Anspruch 1, dadurch gekennzeichnet, daß der Ring (B₁) und die Halbringe (B₂, B₃) auf der Rotorachse (x-x) der Autosynchronmaschine montiert sind und auf einer ersten, einer zweiten bzw. einer dritten feststehenden Bürste (b₁, b₂, b₃) gleiten.

3. Elektrisches Antriebssystem nach Anspruch 1, dadurch gekennzeichnet, daß der Ring (B₁) und die Halbringe (B₂, B₃) feststehend sind und in Gleitkontakt mit einer Doppelbürste (bt) kommen, die sich im Inneren des Rings (B₁) und der Halbringe (B₂, B₃) um die Rotorachse dreht.

4. Elektrisches Antriebssystem nach einem der Ansprüche 1 bis 3, dadurch gekennzeichnet, daß die elektronischen Zerhacker (A, B) des Paares im Motorbetrieb und im Generatorbremsbetrieb in beiden Richtungen wirksam sind.

5. Elektrisches Antriebssystem nach einem der Ansprüche 1 bis 3, dadurch gekennzeichnet, daß die elektronischen Zerhacker (A, B) des Paares im Motorbetrieb parallel zu einer Diode geschaltet sind, wobei die Kontrolle des Statorstroms (Ist) in diesem Fall durch eine Kontrolle des Rotorstroms (Iro) erfolgt.

6. Elektrisches Antriebssystem nach einem der Ansprüche 1 bis 5, dadurch gekennzeichnet, daß:
- im Motorbetrieb die elektronischen Zerhacker (A, B) des Paares durch eine erste bzw. durch eine zweite sogenannte Freilauf-Diode (d₁, d₂) geschützt sind, die zu den ersten und zweiten Wicklungen (E₁, E₂) und den mechanischen Umschaltmitteln bzw. zu den dritten und vierten Wicklungen (E₃, E₄) und den mechanischen Umschaltmitteln parallel geschaltet sind;
- im Generatorbetrieb die Umkehr der Stromflußrichtung in den Statorwicklungen (E₁, E₂, E₃, E₄) gegenüber der Stromflußrichtung im Motorbetrieb durch eine dritte bzw. eine vierte Diode (d₃, d₄) kontrolliert wird, die jeweils in Serie mit der zweiten Wicklung (E₂) bzw. der vierten Wicklung (E₄) geschaltet sind;
- der Rotorstrom (Iro) in der Rotorwicklung (E₅) durch einen dritten, in einer Richtung wirksamen Zerhacker (C) kontrolliert wird, der durch eine fünfte Diode (d₅) geschützt ist.

7. Elektrisches Antriebssystem nach Anspruch 6, dadurch gekennzeichnet,
- daß die Mittel zur Umkonfiguration des Stators vom Motor-/Generatorbremsbetrieb zum Ladebetrieb enthalten:
* einen ersten Kontakt (c₁), der im Motorbetrieb geschlossen und im Ladebetrieb offen ist und der in Serie mit den mechanischen Umschaltmitteln liegt;
* einen zweiten Kontakt (c₂), der ebenfalls im Motorbetrieb geschlossen und im Ladebetrieb offen ist und der in Serie mit den mechanischen Umschaltmitteln liegt;
* einen dritten Kontakt (c₃), der über den Sternpunkt der Sternschaltung der Statorwicklungen (E₁, E₂, E₃, E₄) geschaltet ist und der im Motorbetrieb geschlossen und somit im Ladebetrieb offen ist;
* einen vierten und einen fünften Kontakt (c₄, c₅), die im Motorbetrieb offen bzw. geschlossen und somit im Ladebetrieb geschlossen bzw. offen sind und die die Kathode der vierten Diode (d₄) mit der ersten bzw. mit der vierten Statorwicklung (E₁, E₄) verbinden;
- daß die Kontakte (c₁ bis c₅) die Änderung der Verbindungen zwischen den Statorwicklungen (E₁, E₂, E₃, E₄) und den entsprechenden elektronischen Schaltungsbestandteilen in der Weise ermöglichen, daß dann, wenn die Kontakte in den dem Ladebetrieb entsprechenden Sinn arbeiten, sie durch Öffnen des ersten, des zweiten und des dritten Kontaktes (c₁, c₂, c₃) ermöglichen, die dritte und die vierte Statorwicklung (E₃, E₄) miteinander in Serie zu schalten, um die Primärwicklung eines Transformators zu bilden, die zur Verbindung mit dem Stromnetz bestimmt ist, und andererseits die erste und die zweite Wicklung (E₁, E₂) gleichfalls miteinander in Serie zu schalten, um die Sekundärwicklung des Transformators zu bilden, während durch Schließen und Öffnen des vierten bzw. des fünften Kontakts (c₄, c₅) die erste, die zweite, die dritte und die vierte Diode (d₁, d₂, d₃, d₄) derart miteinander verbunden werden, daß sie die Elemente einer Gleichrichterbrücke bilden, die mit der Sekundärwicklung (E₁ + E₂) des Transformators verbunden ist und dazu bestimmt ist, die Haupt- oder Hilfsbatterie nachzuladen, wenn die elektromotorische Kraft größer als die Versorgungsspannung ist;
- daß der Ladestrom der Batterie in der Primärwicklung (E₃ + E₄) des Transformators durch einen vierten und einen fünften Zerhacker (D, E) kontrolliert wird; und
- daß ein sechster Kontakt (c₆), der im Motorbetrieb geschlossen und somit im Ladebetrieb offen ist, zusammen mit dem zweiten, dem dritten und dem fünften Kontakt (c₂, c₃, c₅) die Primärwicklung von der Sekundärwicklung des Transformators und somit das Stromnetz von der Batterie (Vp) isoliert.

8. Elektrisches Antriebssystem nach Anspruch 7, dadurch gekennzeichnet, daß wenigstens einer der vierten und fünften Zerhacker (D, E) im Ladebetrieb durch einen der Zerhacker (A, B) des im Motor- oder Generatorbremsbetrieb verwendeten Paares gebildet ist.

9. Elektrisches Antriebssystem nach Anspruch 1, dadurch gekennzeichnet, daß der Stator der Autosynchronmaschine vier zusätzliche Statorwicklungen (e₁, e₂, e₃, e₄) enthält, die miteinander in Serie geschaltet und mit der ersten, der zweiten, der dritten bzw. der vierten Statorwicklung (E₁, E₂, E₃, E₄) derart gekoppelt sind, daß die zusätzlichen Statorwicklungen (e₁, e₂, e₃, e₄) die Sekundärwicklung eines Transformators bilden, der es ermöglicht, den Gleichstrom mit der hohen Spannung der Haupt- oder Hilfsbatterie (Vp) in einen Gleichstrom niedriger Spannung umzuformen, der zur Stromversorgung und zum Nachladen einer herkömmlichen Fahrzeugbatterie (Vs) bestimmt ist.

10. Elektrisches Antriebssystem nach einem der Ansprüche 1 bis 9, dadurch gekennzeichnet, daß der Rotor eine zusätzliche Wicklung (E₆) aufweist, die zwischen dem Ring (B₁) und dem ersten Halbring (B₂) angeschlossen ist und das Vorhandensein des Statorstroms (Ist) im Rotor ausnutzt, um die Amperewindungen der Hauptrotorwicklung (E₅) zu verstärken, wobei der Schutz der Zerhacker des Paares durch eine sechste Diode (d₆) erfolgt, die als Freilaufdiode parallel zu der zweiten Statorwicklung (E₆) geschaltet ist.
